# FASCICULE DE BREVET EUROPEEN

(11) **EP 1 972 846 B1**
(45) Date de publication et mention de la délivrance du brevet: **22.02.2012**
(21) Numéro de dépôt: 08290208.1
(22) Date de dépôt: 03.03.2008
(51) Int. Cl.: F16L 37/098

(54) **Dispositif pour le raccordement rapide d'une conduite de fluide, en particulier pour véhicule automobile à un raccord mâle**
Schnellverbindungsvorrichtung zur Verbindung einer Flüssigkeitsleitung mit einer Steckverbindung, insbesondere für Kraftfahrzeug
Device for quick connection of a fluid conduit, in particular for an automobile with a male connection

(30) Priorité: 19.03.2007 FR 0701972
(43) Date de publication de la demande: 24.09.2008
(73) Titulaire: Tristone Flowtech Solutions (TFS), 44470 Carquefou (FR)
(72) Inventeur: Merour, Sylvain, 44120 Vertou (FR)
(74) Mandataire: Laget, Jean-Loup

(56) Documents cités:
- DE-C1- 10 115 399
- FR-A1- 2 710 717
- FR-A1- 2 780 765

## Description

La présente invention concerne un dispositif pour le raccordement rapide d'une conduite de fluide, en particulier pour véhicule automobile à un raccord mâle muni d'au moins une saillie périphérique externe.

Le dispositif pour le raccordement rapide d'une conduite de fluide à un raccord mâle muni d'au moins une saillie périphérique externe, objet de l'invention, comprend au moins :
- un raccord femelle, réalisé sous forme de pièce tubulaire apte à s'emmancher avec le raccord mâle,
- une bague interposable entre lesdits raccords avant emmanchement axial desdits raccords entre eux, cette bague étant maintenue assemblée à emboîtement aux raccords par l'intermédiaire de moyens de retenue axiale coopérant avec des moyens de retenue complémentaires portés par lesdits raccords en vue d'un verrouillage dudit emmanchement,
- un joint d'étanchéité circulaire destiné à s'appliquer sur le pourtour du raccord mâle à l'état emmanché desdits raccords, ce joint, de préférence logé à l'intérieur du raccord femelle, étant maintenu en position axiale par l'intermédiaire de la pièce annulaire de type bague.

De tels dispositifs de raccord étanche pour conduite de fluide sont bien connus à ceux versés dans cet art. Un exemple d'un tel dispositif de raccordement est notamment décrit dans le brevet EP-B-0.605.801 ou le brevet allemand DE-101 15 399. Dans un tel dispositif de raccordement, cinq pièces sont nécessaires, à savoir un raccord mâle, un raccord femelle, un joint d'étanchéité, une bague de maintien du joint à l'intérieur du raccord femelle et une pièce de verrouillage venant s'insérer à l'intérieur d'ouvertures ménagées dans le raccord femelle en vue de la retenue du raccord femelle.

Pour réduire le nombre de pièces d'un tel dispositif de raccordement, le brevet FR-2.795.155 propose de surmouler le joint sur le raccord femelle ou sur un manchon à l'intérieur duquel raccord mâle et raccord femelle sont insérés jusqu'à une position d'emmanchement. L'inconvénient d'un joint surmoulé réside dans le fait qu'une usure du joint nécessite de changer la totalité de la pièce à l'intérieur de laquelle le joint est surmoulé. Il en résulte un surcoût du dispositif de raccordement en terme de maintenance. En outre, la quantité de matière nécessaire à la fabrication d'un tel joint est supérieure à celle nécessaire à la fabrication d'un joint torique standard. Enfin, le surmoulage est un procédé délicat à mettre en oeuvre.

Une autre solution dans laquelle le nombre de pièces du dispositif de raccordement peut être considéré comme égal à quatre est également décrit dans la demande internationale WO 2005/047753. A nouveau, le dispositif est constitué d'un raccord mâle, d'un raccord femelle, d'un joint d'étanchéité et d'un manchon. Toutefois, dans cette configuration, il est nécessaire, pour la solidarisation des pièces entre elles, de respecter une position angulaire prédéterminée des raccords mâle et femelle, et pour la désolidarisation des différentes pièces entre elles, d'entraîner le raccord femelle ou respectivement le raccord mâle en rotation. Cette rotation n'est pas toujours possible au niveau des circuits. En outre, la conception de ce dispositif de raccordement nécessite de disposer d'un raccord mâle de conception particulière. En conséquence et en raison de sa complexité, un tel dispositif de raccordement ne donne pas aujourd'hui satisfaction.

Un autre exemple de dispositif de raccordement est également fourni dans le brevet FR-2.780.765 qui représente l'art antérieur le plus proche. Ce dispositif comporte un raccord femelle, emmanchable avec un raccord mâle, une bague d'étanchéité interposable entre lesdits raccords et un joint d'étanchéité logé dans le raccord femelle et maintenu par la bague. Ce dispositif comporte sur la bague, au niveau des parties de bague mobiles dans le sens d'un écartement lors de la compression de la bague depuis l'extérieur en vue d'une désolidarisation des raccords mâle et femelle, des renflements déformables aptes à coopérer avec des parties en regard du raccord femelle pour limiter la déformation de la bague. L'inconvénient de cette solution est qu'elle oblige à ménager sur la bague des zones déformables au niveau des zones destinées normalement à former les moyens de retenue de la bague aux raccords.

Un but de la présente invention est donc de proposer un dispositif pour le raccordement rapide de conduite de fluide à un raccord mâle du type constitué, non compris le raccord mâle, de trois pièces, la conception de ce dispositif apte à être mis en oeuvre avec un raccord mâle standard, en particulier exempt de gorge circulaire périphérique externe de logement du joint, ne nécessitant ni un surmoulage du joint au niveau de l'une quelconque des pièces du dispositif, ni une orientation particulière des pièces du dispositif au moment de la solidarisation des pièces entre elles, tout en garantissant un raccordement ou respectivement une déconnection aisée du dispositif à un raccord mâle.

A cet effet, l'invention a pour objet un dispositif pour le raccordement rapide d'une conduite de fluide, en particulier pour véhicule automobile, à un raccord mâle muni d'au moins une saillie périphérique externe, ce dispositif comprenant au moins :
- un raccord femelle, réalisé sous forme d'une pièce tubulaire apte à s'emmancher avec ledit raccord mâle,
- une bague, interposable entre lesdits raccords avant emmanchement axial desdits raccords entre eux, cette bague, réalisée sous forme d'une pièce au moins partiellement déformable sous l'effet d'une compression du corps de ladite bague, présentant des parties de corps mobiles dans le sens d'un rapprochement au cours de la déformation par compression de ladite bague, cette bague étant apte à être maintenue assemblée à emboîtement aux raccords par l'intermédiaire de moyens de retenue axiale réalisés d'une seule pièce avec le corps de la bague et coopérant avec des moyens de retenue complémentaires portés par lesdits raccords en vue d'un verrouillage dudit emmanchement, les moyens de retenue de la bague à chacun des raccords étant activés par déplacement relatif axial entre raccords et bague après déformation éventuelle de ladite bague, les moyens de retenue de la bague au raccord mâle se présentant sous forme d'au moins deux organes de verrouillage, s'écartant l'un de l'autre soit, au passage d'insertion dudit raccord mâle à retenir, pour venir se loger derrière la saillie ou nervure et verrouiller ledit raccord à la bague, soit, sous l'effet d'une compression exercée sur le corps de bague de manière à permettre, à l'état écarté, une désolidarisation par simple traction du dispositif de raccordement du raccord mâle,
- un joint d'étanchéité circulaire logé à l'intérieur du raccord femelle, et maintenu en position axiale par l'intermédiaire de la bague,
caractérisé en ce que le raccord femelle comporte, sur le trajet suivi par lesdites parties de corps de bague mobiles dans le sens d'un rapprochement au cours de la déformation par compression de la bague élastiquement déformable, au moins deux butées de fin de course empêchant la déformation par compression de la bague au-delà d'une valeur prédéterminée.

La coopération de la bague avec des butées du raccord femelle permet d'accroître la souplesse des zones compressibles de la bague sans risque de rupture, tout en conservant au niveau de la bague des zones rigides constituant les moyens de retenue de la bague aux raccords. L'utilisation des parties de bague mobiles dans le sens d'un rapprochement lors d'une déformation depuis l'extérieur de la bague sous l'effet d'une pression radiale interne exercée sur la bague en deux zones de compression sensiblement équidistantes des organes de verrouillage de la bague pour une coopération avec les butées de fin de course du raccord femelle permet en outre un réglage précis de la fin de la course de déformation autorisée.

Cette souplesse de la bague permet une simplicité d'assemblage ou de désassemblage de la bague avec les raccords.

Selon une forme de réalisation préférée de l'invention, le dispositif pour le raccordement rapide du type dans lequel les organes de verrouillage sont écartés l'un de l'autre sous l'effet d'une pression radiale interne exercée sur la bague en deux zones de compression sensiblement équidistantes des organes de verrouillage, présente des zones de compression du corps annulaire de bague se prolongeant en direction de l'extérieur de l'anneau ou de l'un des anneaux formé par le corps de bague pour former des surfaces saillantes d'appui contre les butées d'arrêt du raccord femelle à l'état comprimé de ladite bague.

De préférence, la bague et/ou le raccord femelle comporte(nt) une butée angulaire réalisée d'une seule pièce avec la bague ou le raccord femelle, ladite butée se présentant sous forme d'un organe mâle ou respectivement femelle, apte à coopérer avec un organe femelle ou respectivement mâle complémentaire porté par le raccord mâle pour empêcher toute rotation relative entre raccords à l'état emmanché.

Généralement, l'extrémité du raccord femelle, côté introduction de la bague dans ledit raccord, est chanfreinée au niveau du bord de délimitation de l'ouverture de passage de ladite bague. Ce chanfrein qui forme une surface oblique d'introduction facilite le logement au moins partiel de la bague dans le raccord femelle.

De préférence encore, l'extrémité du raccord femelle ,côté introduction de la bague dans ledit raccord, est crénelée, les butées de fin de course, telles que des plots, de la bague étant disposées dans l'espace laissé libre entre deux créneaux.

Généralement, la bague comporte, pour son raccordement au raccord femelle, au moins deux séries de moyens de retenue décalées axialement le long dudit corps de bague, ces moyens de retenue coopérant avec deux séries de moyens complémentaires décalées axialement le long dudit raccord femelle.

L'invention sera bien comprise à la lecture de la description suivante d'exemples de réalisation, en référence aux dessins annexés dans lesquels :

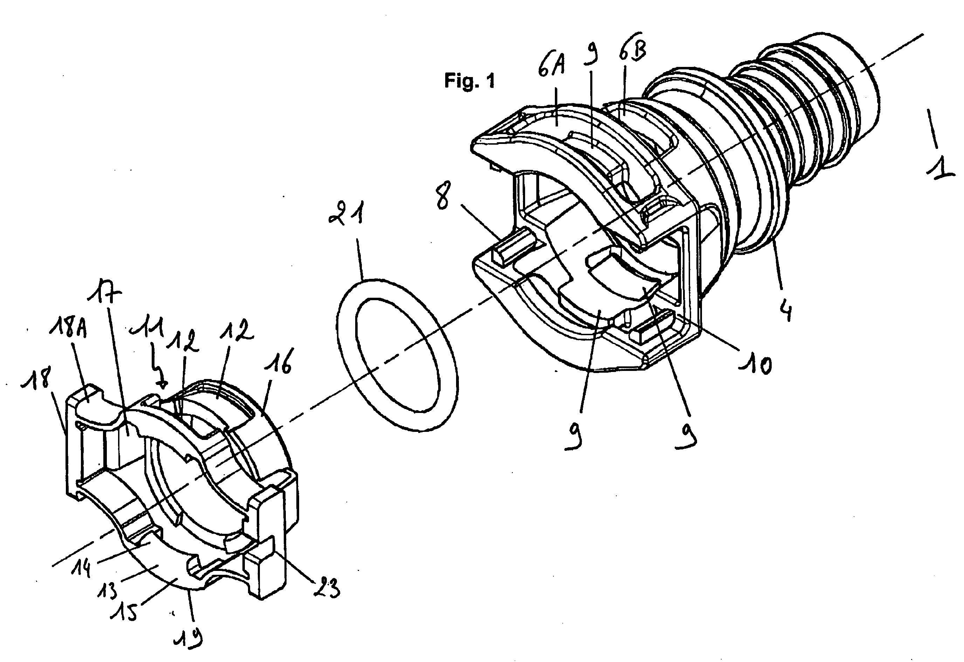

la figure 1 représente une vue en perspective d'un dispositif pour le raccordement conforme à l'invention en position désassemblée des éléments le constituant ;
la figure 2 représente une vue en perspective d'un dispositif de raccordement conforme à l'invention, le raccord femelle et la bague ayant été assemblés l'un à l'autre, le raccord mâle ayant été représenté ;

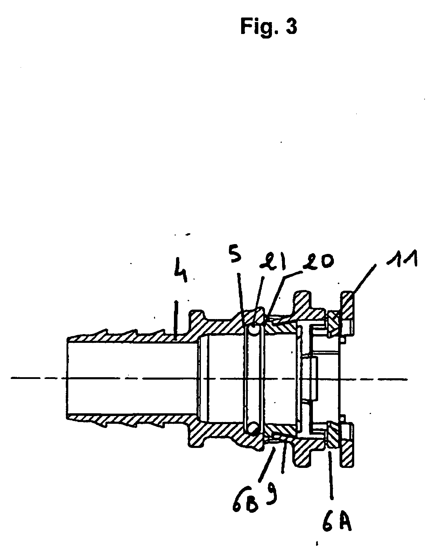

la figure 3 représente une vue en coupe d'un dispositif de raccordement de prise au niveau des ouvertures du raccord femelle.

Comme mentionné ci-dessus, le dispositif pour le raccordement rapide, objet de l'invention, est plus particulièrement destiné au raccordement d'une conduite de fluide, en particulier dans le domaine des véhicules automobiles à un raccord 2 mâle muni d'au moins une saillie 3 radiale externe. Ce dispositif de raccordement peut s'appliquer à tout circuit de circulation de fluide du type comportant au moins un élément émetteur de fluide, un élément récepteur de fluide et au moins une conduite de fluide sectionnée ou non entre lesdits éléments. Ce dispositif de raccordement peut être positionné entre la conduite de fluide ou une section de ladite conduite et un élément récepteur ou émetteur de fluide ou entre deux sections de conduite.

Comme mentionné ci-dessus, ce dispositif de raccordement comprend au moins un raccord femelle, représenté en 4 aux figures, ce raccord réalisé sous forme d'une pièce tubulaire étant destiné à s'emmancher avec un raccord 2 mâle également réalisé sous forme d'une pièce tubulaire. Généralement, ce raccord 4 femelle, présente à l'une de ses extrémités une partie tubulaire en forme de queue de sapin sur laquelle vient s'emmancher à force et de manière étanche une extrémité de la conduite 1 à raccorder. L'autre extrémité du raccord 4 femelle sert à la réception à emboîtement au moins partiel d'une bague 11 qui sera décrite ci-après.

Dans un mode de réalisation particulier de l'invention, l'un des raccords, en particulier le raccord 4 femelle et la conduite de fluide associée, peuvent être réalisés monoblocs sous forme d'un ensemble monolithique.

Le raccord 2 mâle est quant à lui un raccord standard emmanchable ou enfichable dans le raccord 4 femelle et muni de moyens 3 de retenue se présentant généralement sous forme d'une saillie 3 ou nervure périphérique externe. Un tel raccord 2 mâle se caractérise donc pas sa simplicité.

Le dispositif de raccordement comporte encore une bague 11, interposable entre lesdits raccords 2, 4 avant emmanchement axial desdits raccords 2, 4 entre eux. Cette bague 11 est maintenue assemblée à emboîtement aux raccords 2, 4 par l'intermédiaire de moyens 13, 12 de retenue axiale coopérant avec des moyens 3, 6A, 6B, 9 de retenue complémentaires portés par lesdits raccords 2, 4 en vue d'un verrouillage dudit emmanchement. Généralement, la bague 11 est donc assemblée dans un premier temps au raccord femelle par emboîtement au moins partiel de la bague dans le raccord femelle, lui-même solidarisé à la conduite de fluide, avant raccordement de l'ensemble ainsi constitué au raccord 2 mâle par emmanchement du raccord mâle dans l'ensemble constitué de la bague 11 et du raccord femelle.

Pour permettre l'obtention d'un raccordement étanche, un joint 21 d'étanchéité circulaire destiné à s'appliquer sur le pourtour du raccord mâle 2 à l'état emmanché desdits raccords 2, 4, est prévu. Ce joint 21 est logé à l'intérieur du raccord 4 femelle et est maintenu en position axiale par l'intermédiaire de la pièce annulaire de type bague 11.

Ainsi, dans les exemples représentés, le raccord 4 femelle est muni d'un épaulement 5 périphérique interne formant un siège annulaire du joint 21 d'étanchéité tandis que la bague 11 présente une extrémité 20 distale ou un épaulement annulaire s'étendant au moins partiellement en regard du siège du joint 21 à l'état retenu de la bague 11 au raccord 4 femelle. L'extrémité 20 distale ou épaulement annulaire de la bague 11 et le siège du joint 21 forment entre eux une gorge de maintien du joint 21 emprisonné à l'intérieur du corps de raccord 4 femelle entre le siège et l'extrémité libre dudit raccord 4 femelle à l'état couplé du raccord 4 femelle et de la bague 11. La bague 11 élastiquement déformable remplit donc une double fonction, à savoir d'une part une fonction de maintien du joint 21 d'étanchéité à l'intérieur du raccord 4 femelle, y compris lors de la désolidarisation de raccord 2 mâle, du fait de son logement à emboîtement dans le raccord femelle, d'autre part une fonction de verrouillage de l'emmanchement desdits raccords l'un dans l'autre, cette seconde fonction étant obtenue par l'intermédiaire de moyens de retenue portés par la bague 11, ces moyens de retenue coopérant avec des moyens de retenue complémentaires ménagés d'une part sur le raccord 2 mâle, d'autre part sur le raccord 4 femelle.

La conception des moyens de retenue permet un assemblage et un désassemblage par déplacement relatif axial entre raccords 4, 2 et bague 11.

Pour permettre le verrouillage de l'emmanchement entre raccords mâle et femelle, la bague 11 présente des moyens 12, 13 de retenue aux raccords 4, 2 réalisés d'une seule pièce avec le corps de la bague 11. Ces moyens 12, 13 de retenue de la bague 11 à chacun des raccords 4, 2 sont activés par déplacement relatif axial entre raccords 4, 2 et bague 11 après déformation éventuelle de ladite bague 11. Les moyens 13 de retenue de la bague 11 au raccord 2 mâle, se présentent sous forme d'au moins deux organes 14 de verrouillage, s'écartant l'un de l'autre au passage d'insertion dudit raccord 2 à retenir muni d'une saillie 3 ou nervure périphérique extérieure, pour venir se loger derrière la saillie 3 ou nervure et verrouiller ledit raccord à la bague 11. Ces organes 14 de verrouillage sont également aptes à s'écarter l'un de l'autre sous l'effet d'une compression exercée sur le corps de bague 11 de manière à permettre, à l'état écarté, la désolidarisation par simple traction du raccord 2 du reste du dispositif de raccordement.

Pour faciliter l'assemblage de la bague et des raccords, la bague est réalisée sous forme d'une pièce au moins partiellement déformable sous l'effet d'une compression exercée depuis l'extérieur sur le corps de la bague. Ainsi, dans les exemples représentés, la bague 11 est déformée au moins partiellement par compression radiale sous l'effet de forces orientées à chaque fois en direction de l'intérieur de la bague 11 et exercées sur ledit corps de bague en deux points sensiblement diamétralement opposés ou en regard de la bague 11. Ces points ou zones de compression sont représentés en 18 aux figures.

Dans les exemples représentés, la bague 11 est destinée à s'insérer dans le raccord femelle après logement du joint 21 d'étanchéité à l'intérieur du raccord femelle et elle reçoit elle-même à emboîtement le raccord 2 mâle inséré à l'intérieur de l'ensemble formé du raccord femelle et de la bague 11 jusqu'à une position de verrouillage prédéterminée délimitée par une butée radiale externe portée par le raccord 2 mâle, cette butée radiale étant destinée à venir en appui sur une extrémité du raccord 4 femelle. Pour permettre ce montage à emboîtement desdits éléments et un maintien de l'assemblage, la bague 11, déformable au moins par compression radiale sous l'effet de forces orientées à chaque fois en direction de l'intérieur de la bague 11, est formée d'au moins deux anneaux 15, 16 reliés entre eux par des pattes 17 axiales élastiquement déformables. Ainsi, dans les exemples représentés, il est prévu deux pattes 17 axiales positionnées en regard l'une de l'autre et reliant chacune lesdits anneaux entre eux. Les moyens 13 de retenue, réalisés sous forme d'organes 14 de verrouillage aptes à s'écarter l'un de l'autre, sont ménagés sur l'un des anneaux 15, 16 se présentant sous forme d'un anneau élastiquement déformable. Cet anneau est représenté en 15 aux figures. Les moyens 13 de retenue, réalisés sous forme d'organes 14 de verrouillage, permettent le verrouillage et la retenue du raccord 2 mâle à la bague 11. Ces organes 14 de verrouillage sont disposés à la périphérie de l'anneau 15 élastiquement déformable, de manière de préférence diamétralement opposée ou en regard sur ledit anneau. Ces organes 14 de verrouillage font saillie en direction de l'intérieur dudit anneau 15. Ces organes 14 de verrouillage sont écartés l'un de l'autre par déformation depuis l'extérieur dudit anneau 15 sous l'effet d'une pression radiale interne exercée sur ledit anneau 15 en deux zones 18 sensiblement équidistantes des organes 14 de verrouillage. Les parties des organes 14 de verrouillage en saillie en direction de l'intérieur de l'anneau 15 affectent généralement la forme d'un crochet réalisé sous forme de secteur circulaire, ces crochets s'écartant au passage d'insertion du raccord 2 mâle et en particulier de la saillie 3 ou nervure périphérique externe dudit raccord 2, pour venir se verrouiller derrière la saillie 3 ou nervure dudit raccord. La zone de l'anneau 15 reliant les organes 14 de verrouillage auxdites zones 18 de compression de l'anneau affecte à chaque fois la forme d'une lame 22 convexe à convexité tournée vers l'intérieur de l'anneau 15. Cette disposition convexe facilite la déformation par compression de la bague 11.

Les zones 18 de l'anneau 15 destinées à être comprimées pour permettre une déformation de l'anneau 15 sont donc réalisées sous forme de parties planes reliées par l'intermédiaire de la lame 22 aux organes 14 de verrouillage pour former ledit anneau. Ainsi, l'anneau vu de dessus présente une forme sensiblement hexagonale, les deux côtés opposés de l'hexagone parallèles entre eux constituant les zones 18 de compression de l'anneau tandis que les parties de l'anneau équidistantes de ces deux côtés parallèles en regard constituent les zones de réception des organes 14 de verrouillage. Les zones 18 de compression portées par l'anneau 15 élastiquement déformable de la bague 11 se prolongent en direction de l'extérieur dudit anneau pour former des surfaces 18A saillantes d'appui contre les butées 8 d'arrêt du raccord 4 femelle à l'état comprimé de ladite bague 11. En effet, le raccord 4 femelle comporte, sur le trajet suivi par la bague 11 élastiquement déformable au cours de sa déformation par compression, au moins deux butées 8 de fin de course empêchant la déformation par compression de la bague 11 au-delà d'une valeur prédéterminée. Ces butées 8 du raccord femelle coopèrent avec les parties 18, 18A du corps de bague mobiles dans le sens d'un rapprochement lors de la déformation par compression de la bague en vue d'un déverrouillage des raccords, cette déformation par compression étant obtenue par déformation depuis l'extérieur de la bague sous l'effet d'une pression radiale interne exercée sur ladite bague en deux zones 18 de compression sensiblement équidistantes des organes 14 de verrouillage. Ces butées 8 et la forme de l'anneau élastiquement déformable de la bague 11 permettent de disposer d'une bague d'une grande souplesse facilitant ainsi les opérations de raccordement et de déconnection sans risque de rupture de ladite bague et sans nuire aux propriétés mécaniques de retenue aux raccords de ladite bague.

Les anneaux 15, 16 sont équipés chacun d'un organe 12, tel qu'un encochage, de retenue de la bague 11 au raccord 4 femelle, ces organes 12 de retenue enserrant par encliquetage une languette 9 axiale disposée à cheval sur deux ouvertures 6A, 6B du raccord 4 femelle, à l'état inséré de la bague 11 dans ledit raccord 4 femelle. La languette 9 empêche tout rapprochement des anneaux 15, 16 de la bague entre eux tout en assurant par coopération avec les encochages 12 des anneaux 15, 16 une immobilisation axiale de la bague 11 sur le raccord 4 femelle à l'état inséré de la bague 11 dans le raccord 4. Dans cette position, les zones des anneaux 15, 16 servant à la délimitation des encochages s'insèrent au moins partiellement dans des ouvertures 6A, 6B du raccord 4 femelle.

On note que l'extrémité du raccord 4 femelle, côté introduction de la bague 11 dans ledit raccord 4, est crénelée, les butées 8 de fin de course, telles que des plots de la bague 11, étant disposées dans l'espace 10 laissé libre entre deux créneaux. Chaque créneau est évidé pour délimiter une ouverture 6A. L'autre ouverture 6B jouxte l'ouverture 6A et est décalée axialement de l'ouverture 6A sur le corps du raccord 4 femelle. Ces ouvertures sont séparées par une cloison qui porte la languette 9 de retenue axiale de la bague 11, cette languette 9 s'étendant sensiblement orthogonalement à la cloison. En outre, de préférence, l'extrémité du raccord 4 femelle, côté introduction de la bague 11 dans ledit raccord 4, est chanfreinée 25 au niveau du bord de délimitation de l'ouverture de passage de ladite bague 11. Cette disposition facilite l'introduction de la bague dans le raccord femelle.

On note également, et ce de manière non obligatoire, que les organes 14 de verrouillage, qui font saillie en direction de l'intérieur de l'anneau 15, présentent également une partie en saillie de l'extérieur dudit anneau. Cette saillie 19 externe vient, à l'état inséré de la bague 11 dans le raccord 4 femelle, se loger à l'intérieur de l'une, représentée en 6A, des ouvertures 6A, 6B munie de la languette 9 axiale et ménagée en correspondance dans le raccord femelle. Cette surépaisseur de l'anneau au droit des organes 14 de verrouillage permet une retenue supplémentaire de la bague 11 au raccord 4 femelle pour éviter toute désolidarisation intempestive de l'emmanchement.

Comme mentionné ci-dessus, chaque anneau 15, 16 comporte donc des moyens 13, 12 de retenue d'un raccord 2, 4 aptes à coopérer par encliquetage avec des moyens 3, 6A, 6B, 9 de retenue complémentaires portés par un raccord 2, 4. L'anneau 15 élastiquement déformable est donc destiné à assurer la liaison de la bague 11 avec le raccord 2 mâle et une partie de la liaison au raccord 4 femelle à l'aide d'un encochage 12 et de moyens 19. L'autre anneau, représenté en 16 aux figures, dit anneau 16 de liaison au raccord 4 femelle, est quant à lui pourvu de moyens 12 de retenue, tels qu'un encochage, coopérant par encliquetage, avec la languette 9 élastiquement déformable, ménagée sur la paroi dudit raccord 4. La languette ou patte élastiquement déformable, qui s'étend à cheval sur deux ouvertures 6A, 6B du raccord femelle, est obtenue par formation de crevé dans l'épaisseur du raccord femelle. Cette languette 9 est donc rappelée élastiquement dans une position dans laquelle ses extrémités libres font saillie à l'intérieur de la paroi interne du raccord femelle pour venir se loger entre les encochages 12 ménagés au niveau des anneaux 15 et 16 de la bague 11.

Dans le cas où l'anneau 15 élastiquement déformable de la bague 11 comporte, au droit de ses organes 14 de verrouillage de la bague 11 au raccord 2 mâle, des surépaisseurs destinées à former des saillies 19 radiales externes coopérant avec des ouvertures 6A ménagées dans le raccord 4 femelle, on constate que la bague 11 comporte, pour son raccordement à l'un des raccords, en l'occurrence le raccord 4 femelle, au moins deux séries de moyens 12, 19 de retenue décalées axialement le long dudit corps de bague 11. Comme mentionné ci-dessus, ces moyens 12, 19 de retenue coopèrent avec deux séries de moyens 6A, 6B, 9 complémentaires décalées axialement le long dudit raccord 4 femelle.

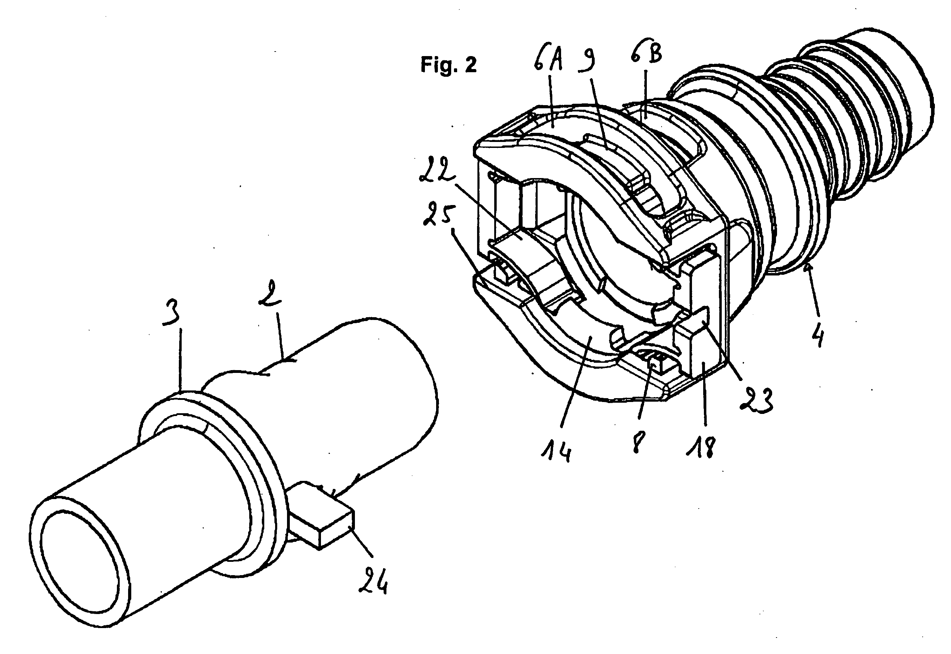

Comme d'ores et déjà mentionné ci-dessus, l'extrémité du raccord 4 femelle par laquelle est introduite la bague 11 et le raccord 2 mâle, présente une forme crénelée. En effet, les ouvertures 6A, ménagées en regard l'une de l'autre et servant à la réception par encastrement des saillies radiales externes de la bague 11, forment un créneau relié à un créneau ménagé en regard par l'intermédiaire d'encoches correspondant à l'espace 10 laissé libre entre deux créneaux. Ces encoches, qui comportent les butées 8 de fin de course affectant ici la forme de plot, permettent, en outre, de loger les zones 18 de l'anneau 15 élastiquement déformable sur lesquelles il est exercé une compression en vue de la déformation dudit anneau 15 lors de la désolidarisation du raccord 2 mâle. Ce logement à emboîtement des zones 18 de compression de l'anneau 15 élastiquement déformable à l'intérieur des encoches du raccord 4 femelle est plus particulièrement visible à la figure 2.

Pour parfaire l'assemblage, la bague 11 et/ou le raccord 4 femelle comporte(nt) une butée angulaire 23 réalisée d'une seule pièce avec la bague 11 ou le raccord 4 femelle, ladite butée 23 se présentant sous forme d'un organe mâle ou respectivement femelle, apte à coopérer avec un organe femelle ou respectivement mâle complémentaire porté par le raccord 2 mâle pour empêcher toute rotation relative entre raccords 2, 4 à l'état emmanché. Dans les exemples représentés où les organes 14 de verrouillage sont écartés l'un de l'autre sous l'effet d'une pression radiale interne exercée sur la bague 11 en deux zones 18 de compression sensiblement équidistantes des organes 14 de verrouillage, la butée 23 angulaire est formée par une encoche ménagée dans l'une des zones 18 de compression de la bague 11.Le raccord 2 mâle est quant à lui muni d'un ergot 24 radial venant se loger dans l'encoche 23 de la bague en position emmanchée verrouillée desdits raccords.

Le fonctionnement d'un tel dispositif de raccordement est le suivant. Le raccord femelle 4 est par exemple emmanché à force à l'intérieur d'une conduite de fluide ou réalisé d'une seule pièce avec ladite conduite. Un joint d'étanchéité 21 est logé à l'intérieur de ce raccord femelle 4. La bague 11 peut alors être positionnée et en particulier introduite à emboîtement à l'intérieur du raccord 4 femelle. Pour permettre cette introduction, la bague 11 est dans un premier temps déformée par compression de la bague 11 en des zones 18 diamétralement opposés de ladite bague, puis animée d'un déplacement relatif axial avec le raccord 4 femelle pour permettre l'activation des moyens de retenue 12 de la bague coopérant avec les moyens 9, 6A, 6B de retenue complémentaires portés par le raccord 4 femelle. Ainsi, la languette 9 élastiquement déformable du raccord 4 femelle vient se loger à l'intérieur des encochages ménagés dans les anneaux 15 et 16 de la bague 11. Parallèlement, les saillies 19 radiales externes ménagées au droit des organes 14 de verrouillage de l'anneau 15 de la bague 11 viennent s'encastrer, lors d'un relâchement de ladite bague ramenant cette dernière dans une position non déformée, à l'intérieur des ouvertures 6A ménagées au niveau du raccord 4 femelle. Dans cette position, la bague est retenue à l'intérieur du raccord 4 femelle, empêchant tout désassemblage desdites pièces entre elles. Dans cette position de retenue, la bague 11 emprisonne le joint à l'intérieur du raccord 4 femelle en exerçant, si nécessaire, une compression axiale sur ledit joint. Le raccord 2 mâle peut alors être reçu à emboîtement à l'intérieur de l'ensemble formé du raccord 4 femelle et de la bague 11. Il suffit d'animer d'un déplacement relatif axial l'ensemble formé du raccord 4 femelle et de la bague 11 d'une part et le raccord 2 mâle d'autre part. Au cours de ce déplacement relatif axial, les organes 14 de verrouillage s'écartent au passage d'insertion de la saillie 3 périphérique externe du raccord 2 mâle avant de venir se loger derrière ladite saillie. Le raccord 2 mâle est équipé d'une saillie périphérique externe supplémentaire qui vient limiter le déplacement relatif axial du raccord 2 mâle dans le sens d'une introduction à l'intérieur du raccord 4 femelle. La désolidarisation du raccord 2 mâle de l'ensemble formé du raccord 4 femelle et de la bague 11 est obtenue par simple déformation de la bague 11 en exerçant une compression au niveau des zones 18 diamétralement opposées ou en regard de l'anneau 15 de la bague 11. Cette déformation de la bague limitée par les butées 8 du raccord 4 femelle provoque un écartement des organes 14 de verrouillage autorisant une désolidarisation du raccord 2 mâle par simple déplacement relatif axial du raccord mâle dans le sens d'une extraction du raccord 4 femelle.

## Revendications

1. Dispositif pour le raccordement rapide d'une conduite (1) de fluide, en particulier pour véhicule automobile, à un raccord (2) mâle muni d'au moins une saillie (3) périphérique externe, ce dispositif comprenant au moins :
- un raccord (4) femelle, réalisé sous forme d'une pièce tubulaire apte à s'emmancher avec ledit raccord (2) mâle,
- une bague (11), interposable entre lesdits raccords (2, 4) avant emmanchement axial desdits raccords (2, 4) entre eux, cette bague (11), réalisée sous forme d'une pièce au moins partiellement déformable sous l'effet d'une compression du corps de ladite bague (11), présentant des parties (18, 18A) de corps mobiles dans le sens d'un rapprochement au cours de la déformation par compression de ladite bague (11), cette bague étant apte à être maintenue assemblée à emboîtement aux raccords (4, 2) par l'intermédiaire de moyens (12, 13) de retenue axiale réalisés d'une seule pièce avec le corps de la bague et coopérant avec des moyens (6A, 6B, 9 ; 3) de retenue complémentaires portés par lesdits raccords (4, 2) en vue d'un verrouillage dudit emmanchement, les moyens (12, 13) de retenue de la bague (11) à chacun des raccords (4, 2) étant activés par déplacement relatif axial entre raccords (4, 2) et bague (11) après déformation éventuelle de ladite bague (11), les moyens (13) de retenue de la bague (11) au raccord (2) mâle se présentant sous forme d'au moins deux organes (14) de verrouillage, s'écartant l'un de l'autre soit, au passage d'insertion dudit raccord (2) mâle à retenir, pour venir se loger derrière la saillie (3) ou nervure et verrouiller ledit raccord (2) à la bague (11), soit, sous l'effet d'une compression exercée sur le corps de bague (11) de manière à permettre, à l'état écarté, une désolidarisation par simple traction du dispositif de raccordement du raccord (2) mâle,
- un joint (21) d'étanchéité circulaire logé à l'intérieur du raccord femelle (4), et maintenu en position axiale par l'intermédiaire de la bague (11),
**caractérisé en ce que** le raccord (4) femelle comporte, sur le trajet suivi par lesdites parties (18, 18A) de corps de bague (11) mobiles dans le sens d'un rapprochement au cours de la déformation par compression de la bague élastiquement déformable, au moins deux butées (8) de fin de course empêchant la déformation par compression de la bague (11) au-delà d'une valeur prédéterminée.

2. Dispositif pour le raccordement rapide selon la revendication 1,
**caractérisé en ce que** la bague (11), déformable au moins partiellement par compression radiale sous l'effet de forces orientées à chaque fois en direction de l'intérieur de la bague (11), est formée d'au moins deux anneaux (15, 16) reliés entre eux par des pattes (17) axiales élastiquement déformables, les moyens (13) de retenue de la bague au raccord (2) mâle, réalisés sous forme d'organes (14) de verrouillage aptes à s'écarter l'un de l'autre, étant ménagés sur l'un (15) des anneaux (15, 16) élastiquement déformable, ces organes (14) de verrouillage étant disposés à la périphérie de l'anneau (15) élastiquement déformable, de manière de préférence diamétralement opposée, et faisant saillie en direction de l'intérieur dudit anneau (15), ces organes (14) de verrouillage étant écartés l'un de l'autre par déformation depuis l'extérieur dudit anneau (15) sous l'effet d'une pression radiale interne exercée sur ledit anneau (15) en deux zones (18) de compression sensiblement équidistantes des organes (14) de verrouillage, la zone de l'anneau (15) reliant les organes (14) de verrouillage auxdites zones (18) de compression de l'anneau affectant la forme d'une lame (22) convexe à convexité tournée vers l'intérieur de l'anneau (15).

3. Dispositif pour le raccordement rapide selon l'une des revendications 1 et 2 du type dans lequel les organes (14) de verrouillage sont écartés l'un de l'autre sous l'effet d'une pression radiale interne exercée sur la bague (11) en deux zones (18) de compression sensiblement équidistantes des organes (14) de verrouillage, **caractérisé en ce que** les zones (18) de compression du corps annulaire de bague se prolongent en direction de l'extérieur de l'anneau ou de l'un des anneaux formé par le corps de bague pour former des surfaces (18A) saillantes d'appui contre les butées (8) d'arrêt du raccord (4) femelle à l'état comprimé de ladite bague (11).

4. Dispositif pour le raccordement rapide selon la revendication 2, **caractérisé en ce que** lesdits anneaux (15, 16) sont équipés chacun d'un organe (12), tel qu'un encochage, de retenue de la bague (11) au raccord (4) femelle, ces organes (12) de retenue enserrant par encliquetage une languette (9) axiale disposée à cheval sur deux ouvertures (6A, 6B) du raccord (4) femelle, à l'état inséré de la bague (11) dans ledit raccord (4) femelle.

5. Dispositif pour le raccordement rapide selon la revendication 4,
**caractérisé en ce que** les organes (14) de verrouillage, qui font saillie en direction de l'intérieur dudit anneau (15), présentent également une partie en saillie de l'extérieur dudit anneau, cette saillie (19) externe venant, à l'état inséré de la bague (11) dans ledit raccord (4) femelle, se loger à l'intérieur de l'une (6A) des ouvertures (6A, 6B) munie de la languette (9) axiale et ménagée en correspondance dans ledit raccord (4).

6. Dispositif pour le raccordement rapide selon l'une des revendications 1 à 5,
**caractérisé en ce que** la bague (11) et/ou le raccord (4) femelle comporte(nt) une butée angulaire (23) réalisée d'une seule pièce avec la bague (11) ou le raccord (4) femelle, ladite butée (23) se présentant sous forme d'un organe mâle ou respectivement femelle, apte à coopérer avec un organe femelle ou respectivement mâle complémentaire porté par le raccord (2) mâle pour empêcher toute rotation relative entre raccords (2, 4) à l'état emmanché.

7. Dispositif pour le raccordement rapide selon la revendication 6, du type dans lequel les organes (14) de verrouillage sont écartés l'un de l'autre sous l'effet d'une pression radiale interne exercée sur la bague (11) en deux zones (18) de compression sensiblement équidistantes des organes (14) de verrouillage, **caractérisé en ce que** la butée (23) angulaire est formée par une encoche ménagée dans l'une des zones (18) de compression de la bague 11.

8. Dispositif pour le raccordement rapide selon l'une des revendications 1 à 7,
**caractérisé en ce que** l'extrémité du raccord (4) femelle ,côté introduction de la bague (11) dans ledit raccord (4), est crénelée, les butées (8) de fin de course, telles que des plots, de la bague (11) étant disposées dans l'espace (10) laissé libre entre deux créneaux.

9. Dispositif pour le raccordement rapide selon l'une des revendications 1 à 8,
**caractérisé en ce que** la bague (11) comporte, pour son raccordement au raccord (4) femelle, au moins deux séries de moyens (12, 19) de retenue décalées axialement le long dudit corps de bague (11), ces moyens (12, 19) de retenue coopérant avec deux séries de moyens (6A, 6B, 9) complémentaires décalées axialement le long dudit raccord (4) femelle. '

10. Dispositif pour le raccordement rapide selon l'une des revendications 1 à 9,
**caractérisé en ce que** l'extrémité du raccord (4) femelle, côté introduction de la bague (11) dans ledit raccord (4), est chanfreinée (25) au niveau du bord de délimitation de l'ouverture de passage de ladite bague (11).

## Claims

1. A device for the quick connection of a fluid conduit (1), in particular for an automobile, to a male connection (2) provided with at least one outer peripheral protrusion (3), said device comprising at least:
- a female connection (4), made in the form of a tubular piece capable of fitting with said male connection (2),
- a ring (11), capable of being inserted between said connections (2, 4) before axial fitting of said connections (2, 4) with one another, said ring (11), made in the form of a piece at least partially deformable under the effect of a compression of the body of said ring (11), having body portions (18, 18A) able to move in the direction coming closer together during the deformation of said ring (11) by compression, said ring being able to be fittingly assembled to the connections (4, 2) via axial retaining means (12, 13) made in a single piece with the body of the ring and cooperating with the complementary retaining means (6A, 6B, 9; 3) supported by said connections (4, 2) for locking of said fitting, the retaining means (12, 13) of the ring (11) at each of the connections (4, 2) being activated by axial relative movement between connections (4, 2) and ring (11) after any deformation of said ring (11), the means (13) for retaining the ring (11) at the male connection (2) assuming the form of at least two locking members (14), moving away from one another either upon the insertion of said male connection (2) to be retained, to be housed behind the protrusion (3) or rib and lock said connection (2) to the ring (11), or under the effect of compression exerted on the ring body (11) so as to make it possible, in the spaced apart state, to separate the connection device from the male connection (2) by simple pulling,
- a circular sealing device (21) housed inside the female connection (4), and maintained in axial position via the ring (11),
**characterized in that** the female connection (4) comprises, on the path followed by said ring (11) body portions (18, 18A) movable in the direction coming closer together during the deformation by compression of the elastically deformable ring, at least two end-of-travel stops (8) preventing the deformation of the ring (11) by compression beyond a predetermined value.

2. The quick connection device according to claim 1,
**characterized in that** the ring (11), at least partially deformable by radial compression under the effect of forces oriented toward the inside of the ring (11) each time, is made up of at least two annuluses (15, 16) connected to one another by elastically deformable axial pads (17), the means (13) for retaining the ring to the male connection (2), made in the form of locking members (14) capable of moving away from one another, being formed on one (15) of the elastically deformable annuluses (15, 16), said locking members (14) being positioned at the periphery of the elastically deformable annulus (15), preferably diametrically opposite, and protruding toward the inside of said annulus (15), said locking members (14) being spaced away from one another by deformation from the outside of said annulus (15) under the effect of an internal radial pressure exerted on said annulus (15) in two compression zones (18) substantially equidistant from the locking members (14), the zone of the annulus (15) connecting the locking members (14) to said compression zones (18) of the annulus assuming the shape of a convex strip (22) with the convexity thereof turned toward the inside of the annulus (15).

3. The quick connection device according to one of claims 1 and 2, wherein the locking members (14) are spaced apart from one another under the effect of an internal radial pressure exerted on the ring (11) in two compression zones (18) substantially equidistant from the locking members (14), **characterized in that** the compression zones (18) of the annular ring body extend toward the outside of the annulus or one of the annuluses formed by the ring body to form protruding support surfaces (18A) against the stops (8) for stopping the female connection (4) when said ring (11) is compressed.

4. The quick connection device according to claim 2, **characterized in that** said annuluses (15, 16) are each equipped with a member (12), such as a notching, for retaining the ring (11) at the female connection (4), said retaining members gripping, by snapping, an axial tab (9) positioned overlapping two openings (6A, 6B) of the female connection (4), when the ring (11) is inserted into said female connection (4).

5. The quick connection device according to claim 4,
**characterized in that** the locking members (14), which protrude toward the inside of said annulus (15), also have a portion protruding outside said annulus, said external protrusion (19), when the ring (11) is inserted into said female connection (4), being housed inside one (6A) of the openings (6A, 6B) provided with the axial tab (9) and formed in correlation in said connection (4).

6. The quick connection device according to one of claims 1 to 5, **characterized in that** the ring (11) and/or the female connection (4) comprise(s) an angular stop (23) made in a single piece with the ring (11) or the female connection (4), said stop (23) assuming the form of a male or female member, respectively, capable of cooperating with a complementary female or male member, respectively, carried by the male connection (2) to prevent any relative rotation between connections (2, 4) when they are fitted together.

7. The quick connection device according to claim 6, wherein the locking members (14) are spaced away from one another under the effect of an internal radial pressure exerted on the ring (11) in two compression zones (18) substantially equidistant from the locking members (14), **characterized in that** the angular stop (23) is formed by a notch formed in one of the compression zones (18) of the ring 11.

8. The quick connection device according to one of claims 1 to 7, **characterized in that** the end of the female connection (4), on the insertion side of the ring (11) into said connection (4), is toothed, the end-of-travel stops (8), such as lugs, of the ring (11) being positioned in the space (10) left free between two teeth.

9. The quick connection device according to one of claims 1 to 8, **characterized in that** the ring (11) comprises, for the connection thereof to the female connection (4), at least two series of retaining means (12, 19) angularly offset along said ring (11) body, said retaining means (12, 19) cooperating with two series of complementary means (6A, 6B, 9) axially offset along said female connection (4).

10. The quick connection device according to one of claims 1 to 9, **characterized in that** the end of the female connection (4), on the insertion side of the ring (11) into said connection (4), is beveled (25) at the edge defining the passage opening of said ring (11).

## Patentansprüche

1. Schnellverbindungsvorrichtung einer Fluidleitung (1), insbesondere für ein Kraftfahrzeug, mit einem männlichen Verbindungsstück (2), das mit mindestens einem äußeren peripheren Vorsprung (3) ausgestattet ist, wobei diese Vorrichtung mindestens umfasst:
- ein weibliches Verbindungsstück (4) in Form eines rohrförmigen Teils, das imstande ist, mit dem männlichen Verbindungsstück (2) eine Steckverbindung zu bilden,
- einen Ring (11), der zwischen den Verbindungsstücken (2, 4) vor dem axialen Einstecken der Verbindungsstücke (2, 4) ineinander zwischenstellbar ist, wobei dieser Ring (11), der in Form eines unter der Wirkung einer Kompression des Körpers des Rings (11) zumindest teilweise verformbaren Teils hergestellt ist, Körperabschnitte (18, 18A) aufweist, die während der Verformung durch Kompression des Rings (11) in Richtung einer Annäherung bewegbar sind, wobei dieser Ring imstande ist, in Steckverbindung mit den Verbindungsstücken (4, 2) über axiale Haltemittel (12, 13), die mit dem Körper des Rings aus einem einzigen Teil gefertigt sind und mit komplementären Haltemitteln (6A, 6B, 9; 3) zusammenarbeiten, die von den Verbindungsstücken (4, 2) im Hinblick auf eine Verriegelung der Steckverbindung getragen werden, gehalten zu werden, wobei die Haltemittel (12, 13) des Rings (11) an jedem der Verbindungsstücke (4, 2) durch relative axiale Bewegung zwischen Verbindungsstücken (4, 2) und Ring (11) nach eventueller Verformung des Rings (11) aktiviert werden, wobei die Haltemittel (13) des Rings (11) am männlichen Verbindungsstück (2) die Form von mindestens zwei Verriegelungsorganen (14) haben, die sich entweder beim Einführen des zu haltenden männlichen Verbindungsstücks (2), voneinander abspreizen, um sich hinter dem Vorsprung (3) oder der Rippe zu positionieren und das Verbindungsstück (2) am Ring (11) zu verriegeln, oder unter Einwirkung einer auf den Körper des Rings (11) ausgeübten Kompression im gespreizten Zustand eine Trennung der Verbindungsvorrichtung vom männlichen Verbindungsstück (2) durch einfaches Ziehen erlauben,
- eine kreisrunde Dichtung (21), die im Innern des weiblichen Verbindungsstücks (4) untergebracht ist und mit Hilfe des Rings (11) in axialer Stellung gehalten wird,
**dadurch gekennzeichnet, dass** das weibliche Verbindungsstück (4) auf dem Weg, der von den während der Kompression des Rings bewegbaren Abschnitten (18, 18A) des Körpers des Rings (11) in Richtung einer Annäherung zurückgelegt wird, mindestens zwei Endlagen (8) aufweist, die die Verformung des Rings (11) durch Kompression über einen vorbestimmten Wert verhindern.

2. Schnellverbindungsvorrichtung nach Anspruch 1, **dadurch gekennzeichnet, dass** der Ring (11), der durch die Wirkung von Kräften, die jedes Mal in Richtung des Innern des Rings (11) wirken, mindestens teilweise durch radiale Kompression verformbar ist, von mindestens zwei Reifen (15, 16) gebildet wird, die miteinander durch axiale, elastisch verformbare Laschen (17) verbunden sind, wobei die Haltemittel (13) des Rings am männlichen Verbindungsstück (2), die in Form von Verriegelungsorganen (14) ausgeführt sind, die imstande sind, sich voneinander abzuspreizen, auf einem (15) der elastisch verformbaren Reifen (15, 16) ausgebildet sind, wobei diese Verriegelungsorgane (14) auf dem Umfang des elastisch verformbaren Reifens (15) vorzugsweise direkt gegenüberliegend angeordnet sind und in Richtung des Innern des Reifens (15) hervorstehen, wobei diese Verriegelungsorgane (14) durch Verformung des Rings (15) von außen durch die Wirkung eines internen radialen Drucks, der auf den Ring (15) in zwei etwa gleich von den Verriegelungsorganen (14) beabstandeten Kompressionszonen (18) ausgeübt wird, voneinander abgespreizt werden, wobei die Zone des Reifens (15), die die Verriegelungsorgane (14) mit dem Kompressionszonen (18) des Reifens verbindet, die Form eines konvexen Plättchens (22) mit in Richtung des Innern des Reifens (15) gedrehter Konvexität aufweist.

3. Schnellverbindungsvorrichtung nach einem der Ansprüche 1 und 2 der Bauart, bei der die Verriegelungsorgane (14) durch die Wirkung eines internen radialen Drucks auf den Ring (11) in zwei etwa gleich von den Verriegelungsorganen (14) beabstandeten Kompressionszonen (18) voneinander abgespreizt werden, **dadurch gekennzeichnet, dass** sich die Kompressionszonen (18) des ringförmigen Körpers des Rings in Außenrichtung des Reifens oder eines der Reifen verlängern, der vom Ringkörper gebildet wird, um im komprimierten Zustand des Rings (11) vorstehende Stützflächen (18A) für die Endlagen (8) des weiblichen Verbindungsstücks (4) zu bilden.

4. Schnellverbindungsvorrichtung nach Anspruch 2, **dadurch gekennzeichnet, dass** die Reifen (15, 16) jeweils mit einem Halteorgan (12) wie einer Kerbe des Rings (11) am weiblichen Verbindungsstück (4) ausgestattet sind, wobei diese Halteorgane (12) im eingeführten Zustand des Rings (11) in das weibliche Verbindungsstück (4) eine axiale Zunge (9), die auf zwei Öffnungen (6A, 6B) des weiblichen Verbindungsstücks (4) aufsitzt, durch Rasten umschließen.

5. Schnellverbindungsvorrichtung nach Anspruch 4, **dadurch gekennzeichnet, dass** die Verriegelungsorgane (14), die in Richtung des Innern des Reifens (15) hervorstehen, weiterhin einen Abschnitt aufweisen, der nach außerhalb des Reifens hervorsteht, wobei sich dieser äußere Vorsprung (19) im eingeführten Zustand des Rings (11) in das weibliche Verbindungsstück (4) in einer (6A) der Öffnungen (6A, 6B) abstützt, die mit der axialen Zunge (9) ausgestattet ist und entsprechend in diesem Verbindungsstück (4) eingearbeitet ist.

6. Schnellverbindungsvorrichtung nach einem der Ansprüche 1 bis 5, **dadurch gekennzeichnet, dass** der Ring (11) und/oder das weibliche Verbindungsstück (4) eine winkelförmige Endlage (23) aufweist/aufweisen, die mit dem Ring (11) oder dem weiblichen Verbindungsstück (4) aus demselben Teil gefertigt ist, wobei die Endlage (23) in Form eines männlichen oder beziehungsweise weiblichen Organs vorhanden ist, das imstande ist, mit einem komplementären weiblichen oder auch männlichen Organ zusammenzuarbeiten, das von dem männlichen Verbindungsstück (2) getragen wird, um jedwede relative Verdrehung zwischen Verbindungsstücken (2, 4) im eingesteckten Zustand zu verhindern.

7. Schnellverbindungsvorrichtung nach Anspruch 6 der Bauart, bei der die Verriegelungsorgane (14) durch die Wirkung eines internen radialen Drucks auf den Ring (11) in zwei etwa gleich von den Verriegelungsorganen (14) beabstandeten Kompressionszonen (18) voneinander abgespreizt werden, **dadurch gekennzeichnet, dass** die winkelförmige Endlage (23) von einer Kerbe gebildet wird, die in eine der Kompressionszonen (18) des Rings (11) eingearbeitet ist.

8. Schnellverbindungsvorrichtung nach einem der Ansprüche 1 bis 7, **dadurch gekennzeichnet, dass** das Ende des weiblichen Verbindungsstücks (4) auf der Seite, auf der der Ring (11) in das Verbindungsstück (4) eingeführt wird, gezackt ist, wobei die Endlagen (8), beispielsweise die Stifte, des Rings (11) in dem Raum (10) angeordnet sind, der zwischen zwei Zacken frei gelassen ist.

9. Schnellverbindungsvorrichtung nach einem der Ansprüche 1 bis 8, **dadurch gekennzeichnet, dass** der Ring (11) für seine Verbindung mit dem weiblichen Verbindungsstück (4) mindestens zwei am Körper des Rings (11) entlang axial versetzte Reihen Haltemittel (12, 19) aufweist, wobei diese Haltemittel (12, 19) mit zwei Reihen komplementärer Mittel (6A, 6B, 9) zusammenarbeitet, die am weiblichen Verbindungsstück (4) entlang axial versetzt sind.

10. Schnellverbindungsvorrichtung nach einem der Ansprüche 1 bis 9, **dadurch gekennzeichnet, dass** das Ende des weiblichen Verbindungsstücks (4) auf der Seite, auf der der Ring (11) in das Verbindungsstück (4) eingeführt wird, auf Ebene des Begrenzungsrands der Durchgangsöffnung des Rings (11) abgeschrägt (25) ist.
